# EUROPEAN PATENT APPLICATION

(11) **EP 1 705 554 A2**
(43) Date of publication of application: **27.09.2006**
(21) Application number: 06111651.3
(22) Date of filing: 23.03.2006
(51) Int. Cl.: G06F 3/038

(54) **System and method for dynamically adapting performance of interactive dialog system basd on multi-modal confirmation**

(30) Priority: 25.03.2005 US 89607
(71) Applicant: AT&T Corp., New York, NY 10013-2412 (US)
(72) Inventor: Bangalore, Srinivas, Morristown, NJ 07960 (US); Johnston, Michael, Hoboken, NJ 07030 (US); Tang, Karen Pie-Yi, Pittsburgh, PA 15213 (US)
(74) Representative: Harding, Richard Patrick

(57) **Abstract**

A method of using user feedback to adapt performance in a multi-modal dialog system is disclosed. The method comprises presenting the user with a single or multiple options for confirmation of received user input, receiving and storing a user selection of one of the single or multiple options and adapting recognition and understanding components of the dialog system according to the stored user selection to improve performance. Other embodiments of the invention include a system and computer-readable media for practicing the method of the invention.

## Description

### BACKGROUND OF THE INVENTION

### 1. Field of the Invention

The present invention relates to an interactive dialog system and more specifically to a system and method of dynamically adapting performance of the interactive dialog system based on a multi-modal input confirmation.

### 2. Introduction

Humans can interact with computing devices in a number of ways, such as through a keyboard, mouse, speech, or a touch-sensitive pad using gesture input. The computing device, depending on the mode of interaction with the user, will have computer algorithms designed to recognize the user input. For example, in a spoken dialog system, speech recognition algorithms will process the user's input speech and seek to identify the text of the user's speech. Other algorithms will then process the text to identify the meaning of the speech, generate responsive text, and then synthesize speech that the user hears.

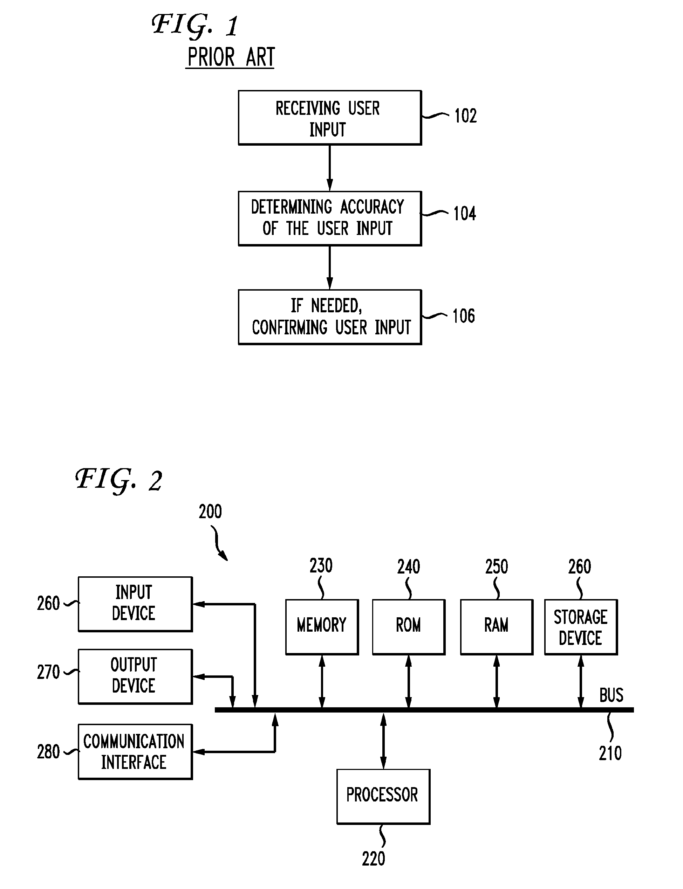

Recognizing user input in any of these modes is never perfect. A user may have sloppy handwriting or gesture input, or a user may have an accent or a dialect that is difficult for a speech recognition system to recognize. It is known in the art to ask for a confirmation of input. For example, a dialog system may receive user input: "I want to fly, uh...uh... I think, to New York". The recognition of the input may have a low probability triggering the dialog system to query: "Did you say you wanted to fly to Newark?". The user can then correct the system and say "No, I wanted to fly to New York". As shown in FIG. 1, this simply method involves receiving input (102), determining how accurately the system recognized the user input (104) and if necessary, confirming the user input (106) through a dialog.

Once a computing system that interacts with a user is deployed, it has no ability to learn from its mistakes. In other words, in many multi-model dialog systems, the same confirmation dialog may need to take place over time. Errors made by a system one day are just as likely to occur the next day. Systems have little or no ability to adapt as result their performance remains static. What is needed in the art is a system and method for providing the ability to adapt to improve their performance over time.

### SUMMARY OF THE INVENTION

Additional features and advantages of the invention will be set forth in the description which follows, and in part will be obvious from the description, or may be learned by practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth herein.

A method of using user feedback to adapt performance in a dialog system. The method comprises presenting the user a single option or multiple options for confirmation of received user input, receiving and storing a user selection of one of the multiple options and adapting recognition and understanding components of the dialog system according to the stored user selection to improve performance.

The invention also comprises embodiments in a system and computer-readable media form for practicing the method of utilizing user feedback to adapt the performance of the dialog system. The dialog system may incorporate one or more of any number of types of user input, such as speech, gesture, mouse or keyboard input, or movement input that is recognized by the device.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

FIG. 1 illustrates a prior art method of receiving user confirmation information;

FIG. 2 illustrates the basic hardware components of a system aspect of the invention;

FIG. 3 illustrates the basic components of an embodiment of the invention;

FIG. 4 illustrates an alternate means of receiving multi-modal user input; and

FIG. 5 illustrates a method embodiment of the invention.

### DETAILED DESCRIPTION OF THE INVENTION

Various embodiments of the invention are discussed in detail below. While specific implementations are discussed, it should be understood that this is done for illustration purposes only. A person skilled in the relevant art will recognize that other components and configurations may be used without parting from the spirit and scope of the invention.

The invention is related to a computing device and how a user interacts with the device. The following discussion is intended to provide a brief, general description of a suitable computing environment in which the invention may be implemented. Although not required, the invention will be described, at least in part, in the general context of computer-executable instructions, such as program modules, being executed by a computing device such as a desktop or laptop computer. Generally, program modules include routine programs, objects, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, network PCs, minicomputers, mainframe computers, and the like. The invention may also be practiced in distributed computing environments where tasks are performed by remote processing devices that are linked through a communications network. In a distributed computing environment, program modules may be located in both local and remote memory storage devices.

With reference to FIG. 2, an exemplary system for implementing the invention includes a general purpose computing device 200, including a processing unit (CPU) 220, a system memory 230, and a system bus 210 that couples various system components including the system memory 230 to the processing unit 220. The system bus 210 may be any of several types of bus structures including a memory bus or memory controller, a peripheral bus, and a local bus using any of a variety of bus architectures. The system may also include other memory such as read only memory (ROM) 240 and random access memory (RAM) 250. A basic input/output (BIOS), containing the basic routine that helps to transfer information between elements within the computing device 200, such as during start-up, is typically stored in ROM 240. The computing device 200 further includes storage means such as a hard disk drive 260, a magnetic disk drive, an optical disk drive, tape drive or the like. The storage device 260 is connected to the system bus 210 by a drive interface. The drives and the associated computer-readable media provide nonvolatile storage of computer readable instructions, data structures, program modules and other data for the computing device 200. The basic components are known to those of skill in the art and appropriate variations are contemplated depending on the type of device, such as whether the device is a small, handheld computing device, a desktop computer, or a computer server.

Although the exemplary environment described herein employs the hard disk, it should be appreciated by those skilled in the art that other types of computer readable media which can store data that is accessible by a computer, such as magnetic cassettes, flash memory cards, digital video disks, Bernoulli cartridges, random access memories (RAMs) read only memory (ROM), and the like, may also be used in the exemplary operating environment.

To enable user interaction with the computing device 200, an input device 260 represents any number of input mechanisms, such as a microphone for speech, a touch-sensitive screen for gesture or graphical input, or means to identify the location of finger movements on a table-top based on a projected image of a keyboard. In other words, gesture input may be in the form of input via a touch-sensitive display pad or gesture input may be recognizing movement of a hand, finger or other object with or without the movement touching the computing device or touching any object. The device output 270 can also be one or more of a number of output means. For example, speech output via a speaker, visual output through a graphical display. Other outputs such as heat, laser-generated holographic images and so forth may also be presented as part of interacting with the user. In some instances, multi-modal systems enable a user to provide multiple types of input to communicate with the computing device 200. The communications interface 280 generally governs and manages the user input and system output.

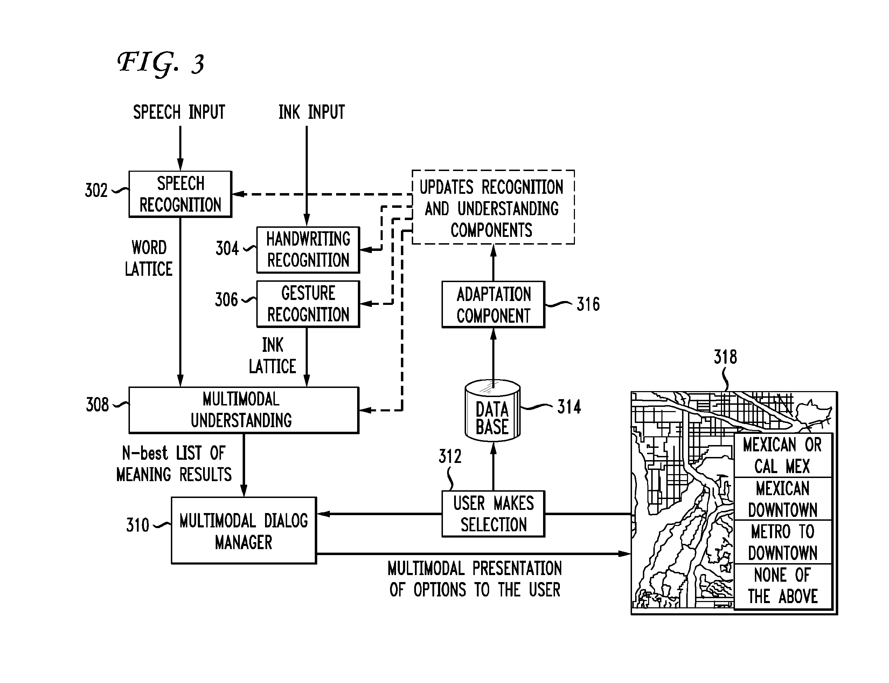

The present invention relates to how to manage user confirmation of previously provided user input in the context of a multi-modal interface with a computing device. Multi-modal systems preferably include graphical displays that allow for parallel presentation of multiple different options to the user for confirmation. FIG. 3 illustrates the basic components in a computing device 300 of a preferred embodiment of the invention. In this embodiment, the computing device includes means for receiving a variety of types of user input. Examples include means for receiving speech input (such as a microphone, speech coder, and so forth). Speech recognition module 302 uses speech algorithms to convert the audible speech signal into text and generates a word lattice. Other types of input are represented as "ink" input. This type of input may include gestures, handwriting, mouse input, movement input, and so forth. A handwriting recognition module 304 and a gesture recognition module 306 are also shown. Depending on the type of input, the appropriate recognition module will be used to recognize the input. These modules create at least one ink lattice representing the non-speech input.

The word lattice and ink lattice are transmitted to a multi-modal understanding module 308 that will process the lattices, examine confidence scores, and generate an N-best list of meaning results. This n-best list is transmitted to a multi-modal dialog manager 310. The dialog manager 310 will consider the ratio of each confidence for each type of input to the confidence score of the resulting n-best list based on the combination of lattices. The dialog manager, through its analysis, will determine whether to present multiple confirmation options to the user. There may be any number of criteria for the dialog manager 308 to determine whether to engage the user in a confirmation dialog. The basic concept is to determine whether or not to present multiple options to the user. There are many different techniques or functions that one of skill in the art could employ. For example, a system could determine how close the confidence scores are to each other. Another way is to look at the ratio of the confidence scores of the result that you are considering over the confidence of the top scoring result and set a threshold. For example, if there were three results with scores 90, 80 and 70 and the two ratios would then be 80/90 and 70/90. If the threshold for the ratios was 0.5 then the system would present all three results to the user. Alternately, if the scores were 90, 20 and 10, then the ratios would be 20/90 and 10/90 and neither option would be presented. The function of determining which to present may be more complex as well, for example, by requiring a minimum number to present to the user.

In contrast to using a simple threshold value, one aspect of the invention related to the function of determining whether or not to present multiple options to the user is to employ a machine learning classifier such as boosting. One of skill in the art will understand the various within the scope of the concept of using a classifier for this function. Here, the system would user a number of input features including the ratios in order to classify each n-best result up to some value "n" as to whether it should be included in the multiple confirm list or not.

If multiple options are presented to the user, when the user makes a selection 312, preferably on the display 318, several things can happen. In one aspect of the invention, an instruction goes back to the multi-modal dialog manager so it can execute the command. Another option is that the N-best list and information about which option the user chose is stored in a database 314. An adaptation module 316 may constantly monitor the database 314 for new information based on user confirmation information. In another aspect of the invention, the adaptation module 316 periodically monitors the database 314 for new data based on user selections of confirmation input.

The user may select among these by simply clicking on one of the options using pen or touch or by other input means. For example, the device may present via a holographic output on a table-top the options. The user can then touch the position on the table-top associated with the selected option. The system may recognize the movement and the position of where the user touches the table-top to recognize the selected option. This approach has the added benefit of not blocking a part of the display as is shown by display 318 in FIG. 3.

The presentation of multiple possible interpretations of the received user input has several advantages. In addition to avoiding more errors, over time the users' selections among multiple options provide supervision to the dialog system regarding which interpretation of the users' input is correct. The invention provides a multi-modal confirmation mechanism that gathers feedback (supervision) from the user in order to identify statistic regarding likely and unlikely interpretations of user inputs. The system uses these statistics to adapt and improve the performance of the dialog system. One or more components of the dialog system, such as one or more recognition modules (for the various types of user input), the dialog manager, the multi-modal understanding module, and so forth. The adaptation module adapts and provides the information needed to modify the system to incrementally improve the performance of multi-modal dialog system over time.

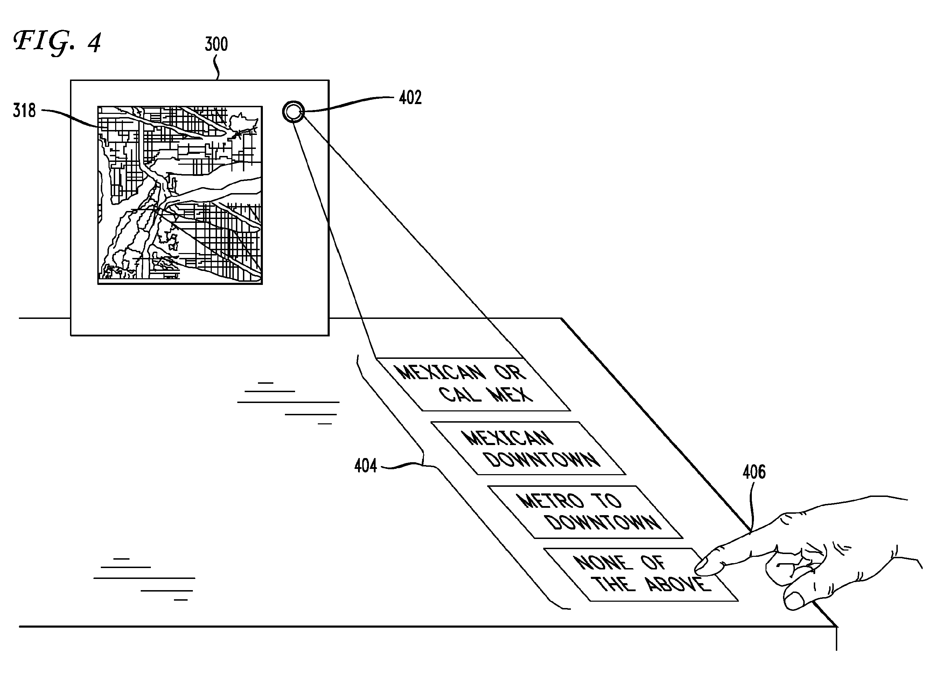

FIG. 4 illustrates a computing device 300 with a display 318. An emitter/sensor 402 is shown as presenting an image 404 on a surface. The user may touch using his or her finger 406 one of the images on the surface 404. The sensing 402 then identifies based on the position in space of the finger 406 or other object which selection the user has made. FIG. 4 illustrates one "mode" of input that may be combined with other modes of input. This may be termed a gesture input because the hand is gesturing and the system is interpreting the input or it may be termed motion input since it is the motion of the hand that is sensed as the input. The device 300 includes a motion sensor and motion module that enables the presentation of the image and the recognition, based on the position and/or movement of an object, what the user input means.

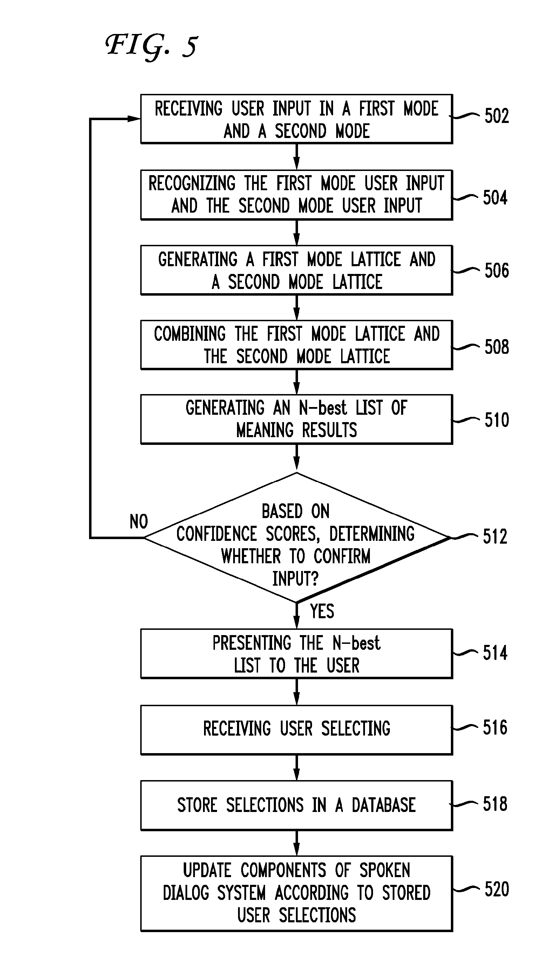

FIG. 5 illustrates the method embodiment of the invention. As mentioned above, an aspect of the invention uses feedback from selection among multiple options for confirmation to dynamically change and improve the performance of an interactive system. The method comprises receiving user input in a first mode and a second mode (502). These modes may be, for example, speech, gesture, keyboard, movement of some type, and so forth. The system recognizes the first mode user input and second mode user input (504). This is accomplished using a recognition module developed to recognize the respective type of input. The system generates a first mode lattice and a second mode lattice. For example, for speech input, the system generates a word lattice based on the recognized text of the words spoken by the user. For other forms of input, such as gesture input, the system generates an ink lattice based on the recognition of the gesture input.

The method next comprises combining the first mode lattice and second mode lattice (508) preferably using a multi-modal understanding module that integrates the multiple types of input and identifies a user meaning. For example, the user may say "I want to go to this restaurant" and on a touch-sensitive display, circle with a gesture a particular restaurant. The multi-modal understanding module will process the input and identify that the user means to go to the circled restaurant. The system also generates an n-best list of meaning results (510). With each of the first and second mode recognitions, there is a confidence score associated with how accurate the particular module believes the recognition is. The system will process the individual confidence scores and/or a combined confidence score to determine whether user confirmation is necessary (512). There may be instances where the confidence of the system is low enough that it is desirable to receive user confirmation of the input.

If the confidence scores are high enough, then the system does not ask for user confirmation but the system continues with the dialog by anticipating further user input or providing the appropriate response. If the analysis in step (512) justifies user confirmation, the system present the n-best list to the user (514) (as mentioned above, this list may comprise one or more options to present options to the user), receives a user selection of which item on the list is the most accurate (518) and stores the selection in a database (518). The system then utilizes the stored user selections to adapt one or more of the modules within the dialog system (520) to improve the performance of the system. By processing the user confirmations of input, the system can learn and improve its recognition of the various types of user input and the meanings associated with that input.

Multi-modal interfaces overcome obstacles in the confirmation process since several alternatives can be presented instantaneously in parallel and selection of an option by pen or touch is not subject to recognition error.

The confirmation threshold that is part of step 512 may be dynamically adjusted according to the interactions with the user. These thresholds may be dynamically modified according to a per-user basis, per-session basis and so forth.

Embodiments within the scope of the present invention may also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, objects, components, and data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other embodiments of the invention may be practiced in network computing environments with many types of computer system configurations, including personal computers, hand-held devices, multi-processor systems, microprocessor-based or programmable consumer electronics, network PCs, minicomputers, mainframe computers, and the like. Embodiments may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

Although the above description may contain specific details, they should not be construed as limiting the claims in any way. Other configurations of the described embodiments of the invention are part of the scope of this invention. Accordingly, the appended claims and their legal equivalents should only define the invention, rather than any specific examples given.

## Claims

1. A method of using user feedback to adapt performance in a multi-modal dialog system, the method comprising:
presenting at least one option for confirmation of received user input;
receiving a user selection for confirmation; and
adapting the multi-modal dialog system according to the received user selection.

2. The method of claim 1, wherein adapting the multi-modal dialog system further comprises adapting at least one of a speech recognition module, a handwriting recognition module, a gesture recognition module and a motion recognition module.

3. The method of claim 1 or 2, wherein presenting at least one option for confirmation of received user input further comprises graphically presenting a prioritized list of options.

4. The method of claim 1, 2 or 3, wherein receiving a user selection further comprises receiving the user input via a touch-sensitive pad.

5. The method of any preceding claim, further comprising:
storing in a database the received user selection of one of the multiple options; and
periodically examining the database by an adaptation module to determine whether to adapt the multi-modal dialog system.

6. The method of any preceding claim, wherein the user input comprises speech input and gesture input and wherein the method further comprises, before presenting the at least one option for confirmation to the user:
generating a word lattice from user speech input;
generating an ink lattice from user gesture input;
combining the generated word lattice with the generated ink lattice; and
generating an N-best list of meanings based on the combined word lattice and ink lattice, wherein the N-best list is presented as the multiple options for confirmation of user input.

7. The method of claim 6 further comprising:
examining confidence scores associated with items in the N-best list; and
determining whether to present a single option or multiple options for confirmation of user input based on the confidence scores.

8. The method of claim 7, wherein determining whether to present multiple options is based on a dynamically-changing threshold.

9. The method of any preceding claim, further comprising determining whether to present a single option or multiple options to the user for confirmation.

10. The method of claim 9, wherein determining whether to present a single option or multiple options to the user is based on one of a threshold value, a ratio of values, and a machine learning classifier.

11. The method of claim 10, wherein if a machine learning classifier is used to determine whether to present a single or multiple options further comprises classifying each of a list of n-best results for a determination of which of the n-best results should be presented to the user.

12. A system for using user feedback to adapt performance in a multi-modal dialog system, the system comprising:
a module configured to present at least one option for confirmation of received user input;
a module configured to receive a user selection for confirmation; and
a module configured adapt the multi-modal dialog system according to the received user selection.

13. The system of claim 12, wherein the module configured to adapt the multi-modal dialog system further adapts at least one of a speech recognition module, a handwriting recognition module, a gesture recognition module and a motion recognition module.

14. The system of claim 12 or 13, wherein the module configured to present at least one option for confirmation of received user input further graphically presents a prioritized list of options.

15. The system of claim 12, 13 or 14, further comprising:
a module configured to store in a database the received user selection of one of the multiple options; and
a module configured to periodically examine the database by an adaptation module to determine whether to adapt the multi-modal dialog system.

16. The system according to any one of claims 12 to 15, wherein the user input comprises speech input and gesture input and wherein the system further comprises:
a module configured to generate a word lattice from user speech input;
a module configured to generate an ink lattice from user gesture input;
a module configured to combine the generated word lattice with the generated ink lattice; and
a module configured to generate an N-best list of meanings based on the combined word lattice and ink lattice, wherein the N-best list is presented as the multiple options for confirmation of user input.

17. The system of claim 16 further comprising:
a module configured to examine confidence scores associated with items in the N-best list; and
a module configured to determine whether to present one or a multiple of options for confirmation of user input based on the confidence scores.

18. The system of claim 17, wherein the module configured to determine whether to present a single option or multiple options to the user does so based on one of a threshold value, a ratio of values, and a machine learning classifier.

19. The system of claim 18, wherein if a machine learning classifier is used to determine whether to present a single or multiple options, then the system further comprises a module configured to classify each of a list of n-best results for a determination of which of the n-best results should be presented to the user.

20. A computer-readable medium storing instructions for controlling a computing device to use user feedback to adapt performance in a multi-modal dialog system, the instructions comprising:
presenting at least one option for confirmation of received user input;
receiving a user selection for confirmation; and
adapting the multi-modal dialog system according to the received user selection.
